# EUROPEAN PATENT APPLICATION

(11) **EP 4 524 999 A1**
(43) Date of publication of application: **19.03.2025**
(21) Application number: 23803780.8
(22) Date of filing: 08.05.2023
(51) Int. Cl.: H01B 5/16, H01B 3/30, H01B 13/00, G03F 7/20, C08L 15/00

(54) **STRETCHABLE ANISOTROPIC CONDUCTIVE FILM CONTAINING LIQUID METAL PARTICLES AND MANUFACTURING METHOD THEREFOR**

(30) Priority: 09.05.2022 KR 20220056785; 04.05.2023 KR 20230058552
(71) Applicant: Midas H&T Inc., Pohang-si Gyeongsangbuk-do 37673 (KR); Postech Academy-Industry Foundation, Gyeongsangbuk-do, 37673 (KR)
(72) Inventor: JEONG, Unyong, Pohang-Si Gyeongsangbuk-do 37673 (KR); KWAK, Mingyu, Pohang-Si Gyeongsangbuk-do 37673 (KR); CHANG, Seyun, Gwacheon-si Gyeonggi-do 13818 (KR); PARK, Hyeji, Pohang-si Gyeongsangbuk-do 37761 (KR)
(74) Representative: Carpmaels & Ransford LLP
(86) International application number: PCT/KR2023/006211
(87) International publication number: WO 2023/219357

(57) **Abstract**

The present invention relates to a stretchable anisotropic conductive film containing liquid metal particles and a manufacturing method therefor. The stretchable anisotropic conductive film according to the present invention includes: a stretchable base material; and a liquid metal portion formed and arranged within the stretchable base material.

## Description

### TECHNICAL FIELD

The present disclosure relates to a stretchable anisotropic conductive film (S-ACF) including liquid metal particles and a manufacturing method therefor.

### BACKGROUND ART

Along with development of material and process technologies, the size of electronic devices, circuits, and wiring become small, and anisotropic conductive films (ACFs) with high-level regular arrangement are essential for electrical connection between the electronic devices and circuits. In particular, since a laminated structure of a display is vertically bonded through ACF, there are an average of 5 to 6 layers of ACF for each display. With this display integration, a three-dimensional (3D) structure is being introduced for stable wiring, however, there is no ACF capable of performing vertical bonding while being deformed in a customized manner according to the 3D structure.

In a case of the ACF of the related art, since particles responsible for conductivity are solid, there is a limit to compression, and it shows low resolution and reliability due to the random arrangement of conductive particles. In addition, only a portion pressed by a protruding electrode has anisotropic conductivity, and when it is used as a stretchable ACF, only a stretchable polymer stretches while the conductive particles do not stretch during tension. Accordingly, the conductive particles may be detached from the film or the electrical connection may be lost. Therefore, there is a need to develop an ACF that has both excellent stretchability and conductivity to solve these problems.

The above description has been possessed or acquired by the inventor(s) in the course of conceiving the present disclosure and is not necessarily an art publicly known before the present application is filed.

### DISCLOSURE OF THE INVENTION

### TECHNICAL GOALS

To solve the above problems, the present disclosure provides a stretchable anisotropic conductive film (S-ACF) capable of being deformed in shape according to an electrode shape and having high anisotropic conductivity by including liquid metal portions, and a method of manufacturing the same.

However, goals to be achieved are not limited to those described above, and other goals not mentioned above are clearly understood by one of ordinary skill in the art from the following description.

### TECHNICAL SOLUTIONS

A stretchable anisotropic conductive film (S-ACF) according to the present disclosure includes a stretchable base material; and liquid metal portions arranged in the stretchable base material.

According to an embodiment, the stretchable base material may include thermoplastic rubber grafted with maleic anhydride including at least one thermoplastic rubber selected from the group consisting of styrene-ethylene-butylene-styrene (SEBS), styrene-isoprene-styrene (SIS), styrene-butadiene-styrene (SBS), polyurethane (PU)-based rubber, and polyolefin (PO) rubber.

According to an embodiment, the liquid metal portions may include a gallium liquid metal; or a gallium-based alloy liquid metal including gallium and at least one metal selected from the group consisting of indium, tin, and zinc.

According to an embodiment, the liquid metal portions may be arranged vertically in a surface of the S-ACF so that both surfaces of the S-ACF are electrically connected.

According to an embodiment, the liquid metal portion may have a horizontal size of 5 micrometers (µm) or more, spacing between the liquid metal portions may be 5 µm to 100 µm, a pitch may be 5 µm to 200 µm, and the horizontal size of the liquid metal portion and the spacing between the liquid metal portions may have a ratio of 2:1 to 1:2.

According to an embodiment, a weight ratio of the liquid metal portions and the stretchable base material may be 5:1 to 3:1, and the S-ACF may have a thickness of 5 µm to 100 µm.

According to an embodiment, the liquid metal portions may include a polymer composite including liquid metal fine particles electrically connected to each other, and the liquid metal fine particles may be liquid droplets dispersed in a stretchable polymer.

According to an embodiment, the dispersed liquid droplet may have a size of 50 nm to 50 µm.

According to an embodiment, a content of the liquid metal fine particles may be 10 wt% to 70 wt% with respect to the polymer composite.

A method of manufacturing a S-ACF according to the present disclosure includes preparing a liquid metal; patterning the liquid metal on a substrate; imparting conductivity to the patterned liquid metal; applying a stretchable base material to the liquid metal to which the conductivity is imparted; and removing the substrate.

According to an embodiment, the liquid metal may be a bulk liquid metal or a copolymer composite including liquid metal fine particles, and the copolymer composite including the liquid metal fine particles may be obtained by mixing a liquid metal and a stretchable copolymer and performing an ultrasonic treatment.

According to an embodiment, the patterning may be performed by photolithography, nanoimprint, soft lithography, block copolymer lithography, or capillary lithography.

According to an embodiment, the patterning may include forming a sacrificial layer on the substrate and patterning a photoresist (PR); applying the liquid metal onto the patterned substrate; and removing the PR.

According to an embodiment, in the imparting of the conductivity, microwaves may be emitted, and the microwaves may be emitted at a temperature of 180°C to 360°C for 5 seconds or more.

### EFFECTS OF THE INVENTION

The present disclosure may provide a stretchable anisotropic conductive film (S-ACF) capable of being deformed in shape according to an electrode shape and having high anisotropic conductivity by including liquid metal portions, and a method of manufacturing the same.

Specifically, the S-ACF according to the present disclosure may be deformed in shape according to a concave lower electrode shape, and maintain stable contact with the electrode while uniformly dispersing the stress throughout the film during tension. Thus, it is stable against the stretching, and therefore it may be transferred according to curvature of a substrate.

### BRIEF DESCRIPTION OF DRAWINGS

FIG. 1 is a schematic view of a cross section of a stretchable anisotropic conductive film (S-ACF) according to an embodiment of the present disclosure.
FIG. 2 is a schematic view of a cross section of a S-ACF according to an embodiment of the present disclosure.
FIG. 3 is a schematic view of a step of patterning a liquid metal of a method of manufacturing a S-ACF according to an embodiment of the present disclosure.
FIG. 4 shows images of (a) a substrate on which a photoresist (PR) is patterned, (b) a substrate coated with a liquid metal, and (c) a pattern on which the liquid metal is patterned according to an embodiment of the present disclosure.
FIG. 5 shows images of (a) a liquid metal before irradiation of microwaves and (b) a liquid metal after irradiation of microwaves according to an embodiment of the present disclosure.
FIG. 6 is a schematic view of a step of removing a substrate of a method of manufacturing a S-ACF according to an embodiment of the present disclosure.
FIG. 7 is a diagram illustrating electrical connection of a S-ACF according to an embodiment of the present disclosure.

### BEST MODE FOR CARRYING OUT THE INVENTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure. In addition, the terms first, second, A, B, (a), and (b) may be used to describe constituent elements of the embodiments. These terms are used only for the purpose of discriminating one component from another component, and the nature, the sequences, or the orders of the components are not limited by the terms. It should be noted that if one component is described as being "connected," "coupled" or "joined" to another component, the former may be directly "connected," "coupled," and "joined" to the latter or "connected", "coupled", and "joined" to the latter via another component.

A component, which has the same common function as a component included in any one embodiment, will be described by using the same name in other embodiments. Unless disclosed to the contrary, the description of any one embodiment may be applied to other embodiments, and the specific description of the repeated configuration will be omitted.

Hereinafter, a stretchable anisotropic conductive film (S-ACF) and a method of manufacturing the same will be described in detail with reference to the embodiments and the drawings. However, the present disclosure is not limited to the embodiments and drawings.

A S-ACF according to the present disclosure includes a stretchable base material; and liquid metal portions arranged in the stretchable base material.

The S-ACF according to the present disclosure may change along with the deformation of the substrate due to excellent stretchability, i.e. elasticity, making it suitable for flexible electronic devices, and may be applied to electronic devices and firmly bond an interface of different members with excellent adhesiveness. Instead of conductive particles used in a S-ACF in the related art, liquid metal portions having stretchability in a liquid state at room temperature are included, and accordingly, it is possible to provide a S-ACF capable of responding to curvature of a substrate and being highly deformable, and capable of being deformable in a customized manner according to a three-dimensional (3D) electrode structure when pressing the S-ACF on a circuit substrate, not only the stretchability in a y-axis direction. A liquid metal of the liquid metal portions may be dispersed and processed and used as particles, micelles, or in a similar form thereto.

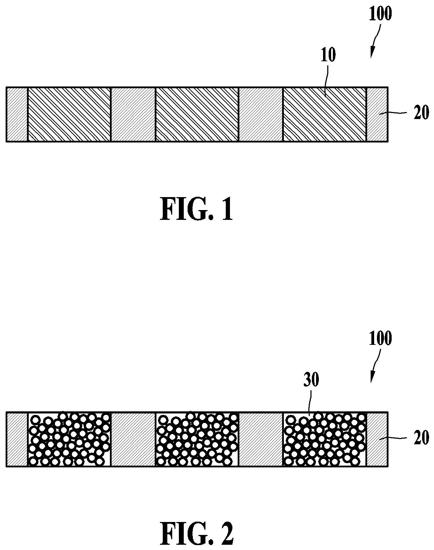

FIG. 1 is a schematic view of a S-ACF according to an embodiment of the present disclosure. Referring to FIG. 1, liquid metal portions 10 may be arranged in a stretchable base material 20, and a S-ACF 100 with a vertical conductive path in which a current flows vertically through the liquid metal portions 10 and a current is not able to flow horizontally due to the non-conductive stretchable base material 20 may be provided.

According to an embodiment, the stretchable base material may include thermoplastic rubber grafted with maleic anhydride including at least one thermoplastic rubber selected from the group consisting of styrene-ethylene-butylene-styrene (SEBS), styrene-isoprene-styrene (SIS), styrene-butadiene-styrene (SBS), polyurethane (PU)-based rubber, and polyolefin (PO) rubber.

The stretchable base material has excellent elasticity, high elongation, and low conductivity, thereby forming a S-ACF so that a current flows only at a desired area and stably supporting the liquid metal portions.

The thermoplastic rubber grafted with maleic anhydride has excellent flexibility and elasticity and may be suitable as a material for the stretchable base material. The thermoplastic rubber grafted with maleic anhydride may form a chemical bond with other materials such as a target substrate to form a stable bond even at low temperatures and low pressures. The thermoplastic rubber may be desirably SEBS, but is not limited those listed above.

The maleic anhydride may have a content of 1 wt% or more of the thermoplastic rubber. When the maleic anhydride is included in a content within the above range, it may have the effect of providing a sufficient number of bond formation sites with respect to a bonding area.

According to an embodiment, the liquid metal portions may include a gallium liquid metal; or a gallium-based alloy liquid metal including gallium and at least one metal selected from the group consisting of indium, tin, and zinc.

The liquid metal refers to a metal that is in a liquid state at room temperature and has stretchability and electrical conductivity. The liquid metal portions may be desirably a liquid metal of an eutectic Ga-In alloy (EGaIn). The EGaIn is formed at a weight ratio of gallium to indium of 3:1 and has a melting point of about 15.5°C, thereby having physical properties of a liquid at room temperature. In addition, since the shape may be easily deformed and restored by an external physical force, it may be used in flexible electronic devices and the like.

According to an embodiment, the liquid metal portions may be arranged vertically in a surface of the S-ACF so that both surfaces of the S-ACF are electrically connected.

The S-ACF may form a vertical conductive path, through which a current flows, through the liquid metal portions formed vertically. In order to cause the current flowing from a member contacting one surface of the S-ACF to flow to another member contacting the other surface of the S-ACF, the liquid metal portions may be formed in a vertical direction on the stretchable base material, and upper and lower portions thereof are exposed to the outside. It is possible to provide a S-ACF with a vertical conductive path in which the current flows vertically through a portion where the liquid metal portion is exposed and the current may not flow horizontally due to a non-conductive stretchable base material.

Referring to FIG. 1, the liquid metal portions 10 may be arranged in the stretchable base material 20, and the arrangement may refer to arrangement in a vertical direction or may refer to that the plurality of liquid metal portions 10 are regularly arranged in the vertical direction throughout the S-ACF 100.

According to an embodiment, the liquid metal portion may have a horizontal size of 5 micrometers (µm) or more, spacing between the liquid metal portions may be 5 µm to 100 µm, a pitch may be 5 µm to 200 µm, and the horizontal size of the liquid metal portion and the spacing between the liquid metal portions may have a ratio of 2:1 to 1:2.

The horizontal size of the liquid metal portion may represent a longitudinal length of the liquid metal portion. For example, the horizontal size of the liquid metal portions arranged in a cylinder may refer to a diameter of one surface, the horizontal size of the liquid metal portions arranged in a square column may refer to a longest length from one vertex to another vertex of one surface, and the horizontal size of the liquid metal portions arranged in a triangular column may refer to a longest length from one vertex to one side of one surface.

When the horizontal size of the liquid metal portion is less than 5 µm, there may be a problem in which the liquid metal does not fill a pattern and thus the pattern is not formed.

The spacing between the liquid metal portions may represent a closest distance between an end of one liquid metal portion and an end of another liquid metal portion arranged in the stretchable base material. The spacing between the liquid metal portions may be desirably 5 µm to 80 µm; 5 µm to 60 µm; 5 µm to 40 µm; 5 µm to 20 µm; 10 µm to 80 µm; 10 µm to 60 µm; 10 µm to 40 µm; 10 µm to 20 µm; 10 µm to 80 µm; 10 µm to 60 µm; 10 µm to 40 µm; or 10 µm to 20 µm.

The pitch of the liquid metal portions may represent a distance between a center of one liquid metal portion to a center of another liquid metal portion arranged in the stretchable base material. The pitch of the liquid metal portions may be desirably 5 µm to 160 µm; 5 µm to 120 µm; 5 µm to 80 µm; 5 µm to 40 µm; 10 µm to 160 µm; 10 µm to 120 µm; 10 µm to 80 µm; 10 µm to 40 µm; 20 µm to 160 µm; 20 µm to 120 µm; 20 µm to 80 µm; or 20 µm to 40 µm, and a fine-pitch S-ACF may be provided.

When the spacing and the pitch of the liquid metal portions are less than the above ranges, a problem in which the liquid metals overlap between the patterns may occur, and when the spacing and the pitch thereof exceed the above ranges, it may be difficult to manufacture a high-resolution S-ACF due to the increase of the pitch. The spacing and the pitch of the liquid metal portions may be adjusted according to the arrangement, the size of the liquid metal portion, and the applied field of the S-ACF.

The horizontal size of the liquid metal portion and the spacing between the liquid metal portions may be desirably 2:1 to 2:3; 2:1 to 1:1; 2:1 to 3:2; 3:2 to 1:1; 3:2 to 2:3; 3:2 to 1:2; 1:1 to 2:3; 1:1 to 1:2; or 2:3 to 1:2.

According to an embodiment, a weight ratio of the liquid metal portion to the stretchable base material may be 5:1 to 3:1, and the S-ACF may have a thickness of 5 µm to 100 µm.

When the weight ratio of the liquid metal portion to the stretchable base material is outside the above range, there may be a problem in which the spacing between patterns is reduced and the shape of the liquid metal portion is broken.

The thickness of the S-ACF may be desirably 5 µm to 80 µm; 5 µm to 60 µm; 5 µm to 40 µm; 5 µm to 20 µm; 10 µm to 100 µm; 10 µm to 80 µm; 10 µm to 60 µm; 10 µm to 40 µm; 10 µm to 20 µm; 20 µm to 100 µm; 20 µm to 80 µm; 20 µm to 60 µm; or 20 µm to 40 µm. When the thickness is less than 5 µm, there may be a problem with patterning not properly performed, and when the thickness exceeds 100 µm, there may be an economic problem due to the increased filling amount of liquid metal.

According to an embodiment, the liquid metal portions may include a polymer composite including liquid metal fine particles electrically connected to each other, and the liquid metal fine particles may be liquid droplets dispersed in a stretchable polymer.

The stretchable polymer may include thermoplastic rubber grafted with maleic anhydride including at least one thermoplastic rubber selected from the group consisting of SEBS, SIS, SBS, PU-based rubber, and PO-based rubber.

The liquid metal fine particles (particles) are liquid droplets dispersed in the stretchable polymer, and the polymer composite may be an aggregate of the liquid droplets. When the liquid metal portions include liquid metal fine particles rather than bulk liquid metal, it is possible to effectively manufacture a fine-pitch S-ACF.

FIG. 2 is a schematic view of a S-ACF according to an embodiment of the present disclosure. Referring to FIG. 2, in the S-ACF 100, liquid metal portions may be formed as aggregates of liquid droplets dispersed in polymer composites 30, i.e., stretchable polymers, including liquid metal fine particles, and may be arranged in the stretchable base material 20.

According to an embodiment, the dispersed liquid droplets may have a size of 50 nm to 50 µm.

The size of the liquid droplets may be desirably 50 nm to 25 µm; 50 nm to 10 µm; 50 nm to 5 µm; 500 nm to 50 µm; 500 nm to 25 µm; 500 nm to 10 µm; 500 nm to 5 µm; 1 µm to 50 µm; 1 µm to 25 µm; 1 µm to 10 µm; or 1 µm to 5 µm. When the size of the liquid droplets is less than 50 nm, there may be a problem in which the liquid metal fine particles are not dispersed, and when the size thereof exceeds 50 µm, there may be a problem in which the liquid metal fine particles are not dispersed and settled or are formed in an oval shape rather than a sphere, making the patterning difficult. When the liquid droplets are formed with a size within the above range, a fine pitch may be formed while maintaining the structure within the S-ACF.

According to an embodiment, a content of the liquid metal fine particles may be 10 wt% to 70 wt% with respect to the polymer composite.

Desirably, the content of the liquid metal fine particles may be 10 wt% to 50 wt%; 10 wt% to 30 wt%; 20 wt% to 70 wt%; 20 wt% to 50 wt%; or 20 wt% to 30 wt% with respect to the polymer composite. When the content of liquid metal fine particles is less than 10 wt%, there may be a problem in forming a uniform film when manufacturing a film due to a small amount of dispersed liquid metal fine particles, and when the content thereof exceeds 70 wt%, there may be a problem in making it into a fine particle form through ultrasonic pulverization due to an increase of the volume of liquid metal compared to a solvent. When the content of the liquid metal fine particles is in the above range, sufficient liquid metal fine particles may be formed while maintaining conductivity of the liquid metal.

A method of manufacturing a S-ACF according to the present disclosure includes preparing a liquid metal; patterning the liquid metal on a substrate; imparting conductivity to the patterned liquid metal; applying a stretchable base material to the liquid metal to which the conductivity is imparted; and removing the substrate.

The method of manufacturing the S-ACF according to the present disclosure may add the liquid metal, thereby manufacturing a S-ACF capable of being deformed in shape according to an electrode shape and having high anisotropic conductivity, and the method may solve the disadvantage of difficulty in patterning and fixing due to high surface tension of a liquid metal of the related art, thereby manufacturing a S-ACF including a liquid metal having uniform conductivity that allows free shape and height control and does not deform the shape of a structure.

The removing of the substrate may include transferring the S-ACF.

Here, the characteristics of the liquid metal and the stretchable base material are the same as those of the liquid metal portions and the stretchable base material described above, and therefore the description thereof will be omitted.

According to an embodiment, the liquid metal may be a bulk liquid metal or a copolymer composite including liquid metal fine particles, and the copolymer composite including the liquid metal fine particles may be obtained by mixing a liquid metal and a stretchable copolymer and performing an ultrasonic treatment.

The preparing of the liquid metal may include preparing a bulk liquid metal, or manufacturing a polymer composite including liquid metal fine particles.

The mixing of the liquid metal and the stretchable polymer may include mixing the liquid metal and the stretchable polymer at a weight ratio of 20:1 to 1:2. When the weight ratio is less than 20:1, it may be difficult to disperse the liquid metal as liquid metal fine particles within a solution, and when the weight ratio exceeds 1:2, it may be difficult to impart conductivity because the contact between the liquid metal fine particles is reduced when a film is manufactured.

The ultrasonic treatment may be performed at a temperature of 16°C to 100°C for 5 minutes to 1 hour. When the ultrasonic treatment is performed within the above range, the liquid metal may be sufficiently granulated to form the liquid metal fine particles.

In a case of the liquid metal patterning of the related art, it is difficult to perform the patterning due to high surface tension of the liquid metal, difficult to adjust a height of the pattern, and difficult to fix the liquid metal in a bulk state having fluidity in the liquid state. In the method of manufacturing the S-ACF according to the present disclosure, since the polymer composite including the liquid metal fine particles is used by mixing the liquid metal and a composite of the stretchable polymer, the shape and the height may be freely adjusted regardless of wettability and the surface tension of the liquid metal, compared to the liquid metal, and a fine-pitch liquid metal structure having a high resolution may be patterned with uniform sizes and spacing.

According to an embodiment, the patterning may be performed by photolithography, nanoimprint, soft lithography, block copolymer lithography, or capillary lithography.

The process by which the patterning is performed is not particularly limited, and the patterning may be desirably performed by the photolithography, and liquid metal with a high resolution having uniform size and spacing may be patterned.

According to an embodiment, the patterning step may include forming a sacrificial layer on the substrate and patterning a photoresist (PR); applying the liquid metal onto the patterned substrate; and removing the PR.

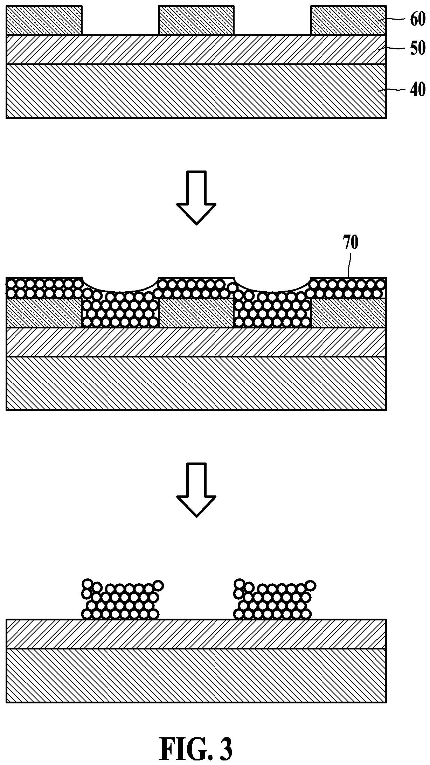

FIG. 3 is a schematic view of a step of patterning a liquid metal of a method of manufacturing a S-ACF according to an embodiment of the present disclosure. Referring to FIG. 3, a sacrificial layer 50 may be formed on a substrate 40 and a PR 60 may be patterned thereon. By applying a liquid metal 70 on the patterned PR 60 and removing the PR 60, the patterned liquid metal 70 may be obtained.

The substrate is not particularly limited, and any substrate selected from silicon, glass, and metal substrate may be used. Desirably, the substrate may be a silicon substrate.

Due to a bonding force between the substrate and the liquid metal, a sacrificial layer having weak adhesiveness to the substrate may be required. The sacrificial layer may refer to a layer that is removed during transfer to form a S-ACF. The sacrificial layer may be formed by applying the polymer onto the substrate and performing a microwave treatment, and may be an amorphous carbon thin film. The polymer applied onto the substrate may be polyethylenimine (PEI) or polyacrylic acid (PAA).

The PR may be patterned by a photomask. The pattern may be aligned variously in any one of a grid, honeycomb, linear, and square arrangement, but is not limited thereto and may be arranged in various forms as needed. The PR may be patterned to arrange a pattern of a desired shape in which the liquid metal is finally arranged.

The applying of the liquid metal may include applying the liquid metal onto the patterned PR to fill an empty space of the pattern. The coating may include at least one selected from the group consisting of spray coating, spin coating, dip coating, screen coating, knife coating, kiss coating, gravure coating, bar coating, screen printing and spray-mist spray coating, and may be desirably spin coating.

The removing of the PR may be performed with a solvent, and desirably performed with acetone. After the PR is removed, the liquid metal may be patterned by the patterning of the PR, and the liquid metal patterning with regular arrangement of uniform size, spacing, and high resolution may be possible.

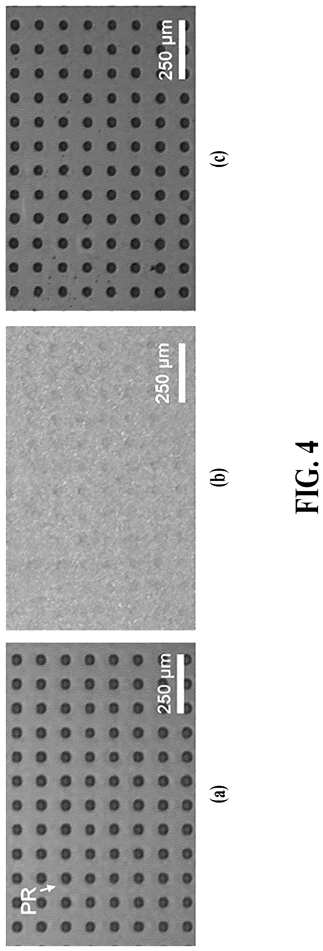

FIG. 4 shows images of (a) a substrate on which a PR is patterned, (b) a substrate coated with a liquid metal, and (c) a pattern on which the liquid metal is patterned according to an embodiment of the present disclosure. Referring to FIG. 4, a substrate on which the PR is patterned by the patterning of the PR, a substrate on which the liquid metal is applied by the applying of the liquid metal on the patterned substrate, and a substrate on which the liquid metal is patterned by the removing of the PR may be confirmed. Referring to (a) of FIG. 4, empty portions other than the patterned PR may be confirmed, and referring to (b) of FIG. 4, the pattern that is completely filled by the liquid metal coating may be confirmed. Referring to (c) of FIG. 4, it may be confirmed that the liquid metal is patterned in the opposite direction to the patterning of the PR by removing the PR.

According to an embodiment, in the imparting of the conductivity, microwaves may be emitted, and the microwaves may be emitted at a temperature of 180°C to 360°C for 5 seconds or more.

A surface of the patterned liquid metal may be in an insulated state. In particular, the surface thereof may be in an insulated state due to an oxide film formed on the surfaces of fine particles, when it is in the form of the polymer composite including liquid metal fine particles. In the related art, a method of forming conductivity between fine particles by breaking an oxide film of a liquid metal using a mechanical force is used, however, in this case, there may be a problem of the shape of the entire structure collapsing or uneven conductivity distribution occurring. In addition, a method of growing and breaking an oxide film through heat treatment at a high temperature of 600°C or higher may be used, but in this case, an initial shape may be lost due to uneven oxide film growth, and there is a problem that transfer using a sacrificial layer may not be performed due to thermal decomposition of the sacrificial layer. On the other hand, the method of imparting the conductivity using the microwaves may impart the conductivity rapidly at a low temperature, and may not cause the deformation of the shape of the liquid metal fine particles, and therefore, it is possible to impart the conductivity uniformly without changing the shape of the entire structure, which may advantageous for patterning.

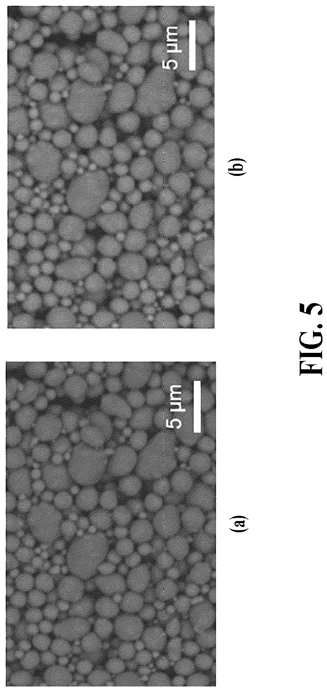

FIG. 5 shows images of (a) a liquid metal before irradiation of microwaves and (b) a liquid metal after irradiation of microwaves according to an embodiment of the present disclosure. Referring to FIG. 5, it may be confirmed that the shape of the liquid metal fine particles does not change even after the irradiation of the microwaves, but only the conductivity is imparted.

The microwaves may be irradiated for 30 seconds or more at a temperature of desirably 180°C to 350°C; 180°C to 300°C; 180°C to 250°C; 250°C to 360°C; 250°C to 350°C; or 250°C to 300°C. When the microwaves are irradiated at a temperature lower than 180°C, there may be a problem that the liquid metal portion does not become conductive, and when microwaves are irradiated at a temperature higher than 360°C, there may be a problem that a crystalline oxide film may grow on the surface of the liquid metal, destroying the form of the liquid metal. When the microwaves are irradiated for 5 seconds or more, the conductivity may be secured, and desirably, when the microwaves are irradiated for 30 seconds or more, the uniform conductivity may be secured overall.

The applying of the stretchable base material may include at least one selected from the group consisting of spray coating, spin coating, dip coating, screen coating, knife coating, kiss coating, gravure coating, bar coating, screen printing and spray-mist spray coating, and may be desirably spin coating. The stretchable base material may be applied with a thickness lower than a height of the patterned liquid metal. By applying the stretchable base material, a S-ACF including the liquid metal arranged within the stretchable base material may be formed.

The method may further include performing oxygen plasma treatment after the applying of the stretchable base material. The applied stretchable base material may also be applied on the patterned liquid metal so that the liquid metal is not exposed to the surface. Since there may be a problem with conduction when the liquid metal is not exposed to the surface, the stretchable base material applied on the liquid metal may be removed by etching using the oxygen plasma treatment.

The removing of the substrate may include attaching a thermal release tape on the applied stretchable base material; separating the substrate and the sacrificial layer; removing the sacrificial layer; and removing the thermal release tape. The removing of the substrate may include transferring the S-ACF.

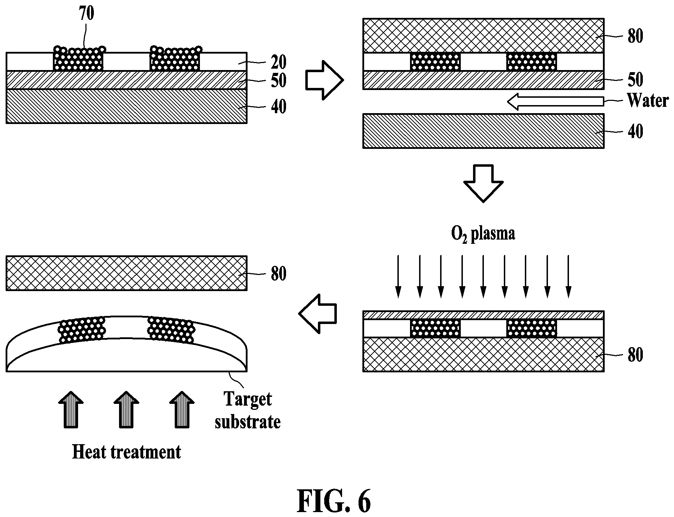

FIG. 6 is a schematic view of a step of removing a substrate of a method of manufacturing a S-ACF according to an embodiment of the present disclosure. Referring to FIG. 6, a thermal release tape 80 may be attached to the stretchable base material 20 including the liquid metal 70, and placed in water to separate the substrate 40 and the sacrificial layer 50. The sacrificial layer 50 may be removed by the oxygen plasma treatment performed on the surface of the separated sacrificial layer 50, and the S-ACF may be transferred to a target substrate by detaching the thermal release tape 80 through the heat treatment.

In the related art, in order to transfer a film on a substrate, a method of applying a solvent-soluble polymer thinly on a substrate, placing a desired film thereon, and putting in a solvent to dissolve the polymer was mainly used, however, since most polymers carbonize and undergo thermal decomposition at a temperature of 300°C or higher, it was difficult to use this method to transfer a film on a substrate that has been heat-treated by the microwave irradiation. On the other hand, the sacrificial layer may be used on a substrate heat-treated by the microwave irradiation because it is stable at 300°C or lower, and it has a weak adhesiveness to the substrate, and therefore, it may be easily separated from the substrate and removed.

In the separating of the substrate and the sacrificial layer, the separating may be performed using water. Since the sacrificial layer has weak adhesiveness to the substrate, it may be easily separated from the substrate by putting it in water.

In the removing of the sacrificial layer, the removing may be performed by etching the sacrificial layer separated from the substrate using oxygen plasma treatment. The S-ACF may be manufactured without removing the sacrificial layer, but the film may not be transparent and may have a color.

In the removing of the thermal release tape, the S-ACF may be transferred to a desired target substrate or member while removing the thermal release tape through the heat treatment. As the S-ACF may include the liquid metal, not only the stretchable base material, but also the liquid metal has stretchability, and therefore, it may respond to the bending of the target substrate. The heat treatment may be performed at 100°C to 150°C.

The removing of the substrate may be an effective method that may be used when transferring a target heat-treated at 300°C or lower from a substrate to another substrate.

In the related art, it is difficult to form a sophisticated structure such as a fine pitch in a S-ACF because solid conductive particles are used, and there may be limitations in shape deformation through hot press due to the solid particles. Therefore, only the stretchable polymer stretches during tension and the conductive particles do not stretch, and accordingly, problems such as the conductive particles detaching from the film or losing electrical connection may occur, and in a case of a concave lower electrode, there may be difficulties in electrical connection because it does not contact the electrode shape. On the other hand, the S-ACF according to the present disclosure uses a stretchable and conductive liquid metal that is in a liquid state at room temperature instead of the solid conductive particles, thereby efficiently forming a fine-pitch film, capable of being deformed in shape according to a shape of a concave lower electrode, and imparting high anisotropic conductivity at the level of metal (> 10⁶ S/m) in the vertical direction of the film.

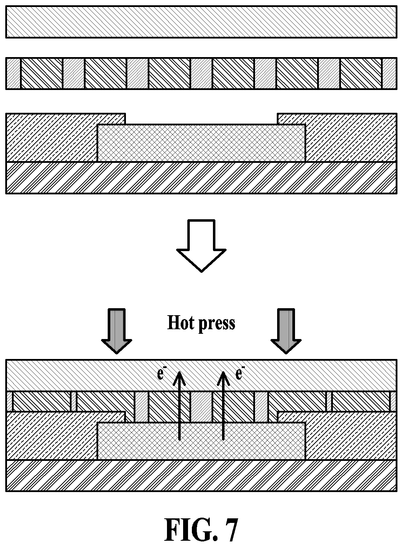

FIG. 7 is a diagram illustrating electrical connection of a S-ACF according to an embodiment of the present disclosure. Referring to FIG. 7, it may be confirmed that, by using the stretchable and conductive liquid metal in a liquid state at room temperature rather than solid conductive particles, when electrically connecting to a member having a concave lower electrode, the shape may be deformed according to the shape of the concave lower electrode, thereby imparting high anisotropic conductivity.

The S-ACF according to the present disclosure uses the liquid metal having stretchability thereby uniformly distributing stress throughout the film during stretching and maintaining stable contact with the electrode. Thus, it is stable against the stretching, and therefore it may be transferred according to the curvature of the substrate. Therefore, it may be used to connect circuits with uneven surface heights and high integration, and has high applicability in fields where multiple anisotropic conductive films are used, such as packaging and displays. In particular, it may be used in robotics and electronic devices such as wearable sensors, flexible displays, and electronic textiles that require flexibility and elasticity, and may provide essential elements for miniaturization of devices.

Hereinafter, the present disclosure will be described in more detail with reference to examples.

However, the following examples are only for illustrating the present disclosure, and the present disclosure is not limited to the following examples.

### Examples

### Manufacturing of S-ACF

After dissolving SEBS-g-ma as a stretchable polymer in toluene, 20 wt% of liquid metal (EGaln) was added and ultrasonicated (20 min) to produce a polymer composite including liquid metal fine particles.

To transfer the S-ACF, a PAA polymer was spin-coated (3000 rpm, 30 sec) on a silicon substrate to form a thin film, and then the polymer thin film was converted into an amorphous carbon thin film through microwave irradiation at 300°C for 1 minute to form a sacrificial layer. A PR (AZ 2070) was patterned on a silicon substrate, on which the amorphous carbon thin film is disposed, to have predetermined size and spacing (5 to 20 µm). The polymer composite including the liquid metal fine particles in an ink form was spin-coated (2000 rpm, 30 sec) on the patterned PR. The substrate coated with the liquid metal was immersed in acetone to remove the remaining PR to pattern the structure of the liquid metal fine particles.

The conductivity was imparted to the patterned liquid metal fine particles by the microwave irradiation at 340°C for 1 minute. SEBS-g-ma as the stretchable base material was spin-coated (1000 rpm, 60 sec) on the substrate on which the liquid metal is patterned and to which the conductivity is imparted to be thinner than the height of the structure of the liquid metal fine particles, to manufacture a S-ACF having a thickness of 8 µm including the liquid metal.

For the transfer of the S-ACF, it was put in water after attaching a thermal release tape to separate a substrate and an amorphous carbon thin film, and the amorphous carbon thin film was removed through the oxygen plasma treatment with intensity of 200 W for 5 minutes. The S-ACF was placed on a target substrate to transfer, and the film was transferred while removing the thermal release tape through the heat treatment at 120°C.

While the embodiments are described, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and equivalents to the claims are also within the scope of the following claims.

## Claims

1. A stretchable anisotropic conductive film (S-ACF) comprising:
a stretchable base material; and
liquid metal portions arranged in the stretchable base material.

2. The S-ACF of claim 1, wherein the stretchable base material comprises thermoplastic rubber grafted with maleic anhydride comprising at least one thermoplastic rubber selected from the group consisting of styrene-ethylene-butylene-styrene (SEBS), styrene-isoprene-styrene (SIS), styrene-butadiene-styrene (SBS), polyurethane (PU)-based rubber, and polyolefin (PO) rubber.

3. The S-ACF of claim 1, wherein the liquid metal portions comprise a gallium liquid metal; or a gallium-based alloy liquid metal comprising gallium and at least one metal selected from the group consisting of indium, tin, and zinc.

4. The S-ACF of claim 1, wherein the liquid metal portions are arranged vertically in a surface of the S-ACF so that both surfaces of the S-ACF are electrically connected.

5. The S-ACF of claim 1, wherein
the liquid metal portion has a horizontal size of 5 micrometers (µm) or more,
spacing between the liquid metal portions is 5 µm to 100 µm,
a pitch is 5 µm to 200 µm, and
the horizontal size of the liquid metal portion and the spacing between the liquid metal portions have a ratio of 2:1 to 1:2.

6. The S-ACF of claim 1, wherein
a weight ratio of the liquid metal portions and the stretchable base material is 5:1 to 3:1, and
the S-ACF has a thickness of 5 µm to 100 µm.

7. The S-ACF of claim 1, wherein
the liquid metal portions comprise a polymer composite comprising liquid metal fine particles electrically connected to each other, and
the liquid metal fine particles are liquid droplets dispersed in a stretchable polymer.

8. The S-ACF of claim 7, wherein the dispersed liquid droplet has a size of 50 nm to 50 µm.

9. The S-ACF of claim 7, wherein a content of the liquid metal fine particles is 10 wt% to 70 wt% with respect to the polymer composite.

10. A method of manufacturing a stretchable anisotropic conductive film (S-ACF), the method comprising:
preparing a liquid metal;
patterning the liquid metal on a substrate;
imparting conductivity to the patterned liquid metal;
applying a stretchable base material to the liquid metal to which the conductivity is imparted; and
removing the substrate.

11. The method of claim 10, wherein
the liquid metal is a bulk liquid metal or a copolymer composite comprising liquid metal fine particles, and
the copolymer composite comprising the liquid metal fine particles is obtained by mixing a liquid metal and a stretchable copolymer and performing an ultrasonic treatment.

12. The method of claim 10, wherein the patterning is performed by photolithography, nanoimprint, soft lithography, block copolymer lithography, or capillary lithography.

13. The method of claim 10, wherein the patterning comprises:
forming a sacrificial layer on the substrate and patterning a photoresist (PR);
applying the liquid metal onto the patterned substrate; and
removing the PR.

14. The method of claim 10, wherein
in the imparting of the conductivity, microwaves are emitted, and
the microwaves are emitted at a temperature of 180°C to 360°C for 5 seconds or more.
